# EUROPEAN PATENT APPLICATION

(11) **EP 0 667 473 A1**
(43) Date of publication of application: **16.08.1995**
(21) Application number: 95300615.2
(22) Date of filing: 31.01.1995
(51) Int. Cl.: F16K 35/02

(54) **Rotating valve with self-locking device**

(30) Priority: 09.02.1994 JP 36639/94
(71) Applicant: TOMOE TECHNICAL RESEARCH COMPANY, Higashi Osaka-shi, Osaka-fu (JP)
(72) Inventor: Kamezawa, Jiro, c/o Tomoe Technical Res. Co., Osaka-shi, Osaka (JP)
(74) Representative: Carpenter, David

(57) **Abstract**

A valve is disclosed which comprises a movable valve element (3) rotatably mounted in a valve body (2); opening and closing of the valve for controlling flow of fluid through a fluid passage being achieved by rotating the valve element (3); a notch passage (10) connected with one end of a stem (5) which pivotably mounts the valve element (3); the notch plate (10) being axially movable but restricted to rotate with the stem (5); a manual actuation knob (14) mounted on the notch plate (10); a casing (21) provided on the valve body (2), the casing (21) housing the notch plate (10) and guiding the movement of the notch plate (10); notch means (24) preventing rotation of the notch plate (10) when the notch means (24) engages the notch plate (10); and means for biassing the notch plate (10) towards the notch means (24).

## Description

This invention relates to a valve intended to be controlled manually, and more particularly relates to a valve arranged to be opened and closed by rotating a valve element thereof.

A variety of valves are known, for example butterfly valves, ball valves, cocks and the like, in which rotation of a valve element is adapted to open or close a flow passage and is adapted to control the flow of various kinds of fluid through the valve. Among these rotating valves, a valve having a small diameter is commonly arranged to be operated manually using an operating lever or the like which is provided at the outer end of an extension of a valve stem.

Ball valves or cocks are well restrained by the pressure of the valve element against the valve seat, the setting of the valve tending not to be influenced by changes in fluid pressure or changes in fluid speed. Therefore, for this kind of valve, it is not necessary to provide additional means for restricting movement of the valve element when the valve is partially open.

On the other hand, for butterfly valves, the valve element is not restrained properly due to their construction, so that some unbalanced torque may be imposed resulting from changes in fluid pressures or changes in fluid speed, and thus the setting of the valve may be changed. Accordingly, it is preferable to provide additional means for restricting movement of the valve element. For example, a plate with a notch may be provided, a projection being provided on the top end of the operating lever to engage with the notch. Alternatively, an extra screw may be fastened to the lever, so that the lever does not move unexpectedly.

For rotating valves, the amount of rotation is usually limited to approximately 90°, and a stopper is commonly provided to prevent movement beyond the opening position and also to control the minimum or maximum opening position.

The notch, screw and stopper are provided on the outer surface of the valve, and therefore these elements are easily deformed or broken. Sometimes, the notch and the projection become disengaged resulting in erroneous operation. Since the lever protrudes from the valve, accidental contact with the lever may result in the setting of the valve being adjusted unintentionally.

This invention has an object to provide a valve and a control arrangement therefor wherein the setting of the desired valve position can be easily achieved at any position of the valve element, such as the minimum, maximum or an intermediate point, and any projection or notch is eliminated from the outside of the device to ensure the safety of operation procedures. Moreover, the long life of the device as well as the down sizing is also achieved.

According to the present invention there is provided a valve comprising a rotatable valve element positioned in a valve body for the opening and closing of a fluid passage, and a control assembly for the valve element, the control assembly being characterized by:
a notch plate provided at an end of a stem which rotatably mounts the valve element within the valve body, the notch plate being rotatable with the stem and movable in the axial direction with respect to the stem;
an actuator provided on the notch plate;
a casing provided on the valve body, the casing housing the notch plate and guiding the axial and rotational movement of the notch plate; and
notch means provided in the casing, the notch plate being biased towards the notch means and arranged such that when the notch plate engages the notch means, rotational movement of the notch plate with respect to the valve body is restricted.

In order to limit movement of the valve element, a stopper and a stopper receiver may be provided on the notch plate and the casing and arranged to contact one another when the limit of movement is reached.

Each notch preferably comprises a tooth-like convex projection and a concave recess of rectangular section, both sides of the convex projection being tapered toward its top, while the width of the top is exactly same as that of the bottom of the recess. The notch plate is preferably of disk-like form, a plurality of notches being equally spaced upon the circular surface thereof, each projection and each recess extending in a radial direction.

The valve preferably further comprises pressurizing means for the notch plate, conveniently in the form of a coiled spring.

The valve may be a butterfly valve comprising a valve body in which a cylindrical flow passage is drilled, a disk-like valve element pivoted so as to be rotatable in the valve body, and an elastic seating ring provided between the valve body and the valve element.

When the control arrangement is used, the following result is obtained. When the knob is pushed down, the notch plate is shifted in the axial direction, and the engagement between the notch plate and the notch means in the casing is broken. The notch plate and knob are then free to rotate. The rotation of the knob rotates the stem which is connected with the knob via the notch plate, and results in rotation of the valve element to enable the required setting to be achieved. Moreover, movement of the notch plate is limited by contact between the stopper and the stopper receiver, whereby the position of maximum opening or closing can be determined. When the force pushing down the knob is released, the notch plate moves upwards under the action of the spring resulting in engagement between the notch plate and the notch means provided in the casing. Thus the rotation is prevented, and the setting of the valve is maintained.

It will be recognised that the valve and control arrangement are of simple construction and a reduction in size can be achieved, and moreover a self-lock function can be also attained. This function ensures steady maintenance of the desired valve setting. The control arrangement is provided within the casing, and portions like the notch, screw, stopper and the like do not project therefrom whereby erroneous operation can be reduced.

The invention will further be described, by way of example, with reference to the accompanying drawings, in which:
Figure 1 is a perspective view of a valve according to an embodiment of the present invention;
Figure 2 is a longitudinal cross-sectional view of the valve of Figure 1;
Figure 3 is a latitudinal cross-sectional view of the valve of Figure 1;
Figure 4 is an exploded perspective view of the upper portions of the valve of Figure 1;
Figure 5 is an exploded perspective view of the lower portions of the valve of Figure 1;
Figure 6 is a partial cross-sectional view of the valve where the lock is released;
Figure 7 is a perspective view of a notch plate and a casing;
Figure 8 is a plan view of the notch plate;
Figure 9 is a side view of the notch plate;
Figure 10 is a partial cross-sectional view of the notch plate;
Figure 11 is a plan view showing the position of a stopper;
Figure 12 is a cross-sectional view of the casing;
Figure 13 is a bottom view of the casing;
Figure 14 is a bottom view where the notch plate and the casing are connected;
Figure 15 is a plan view of part of a notch of the notch plate;
Figure 16 is a sectional view of the notch of Figure 15;
Figure 17 is a plan view of a notch of the casing;
Figure 18 is a sectional view of the notch of Figure 17; and
Figure 19 is a front view showing a valve having a different design of operating knob.

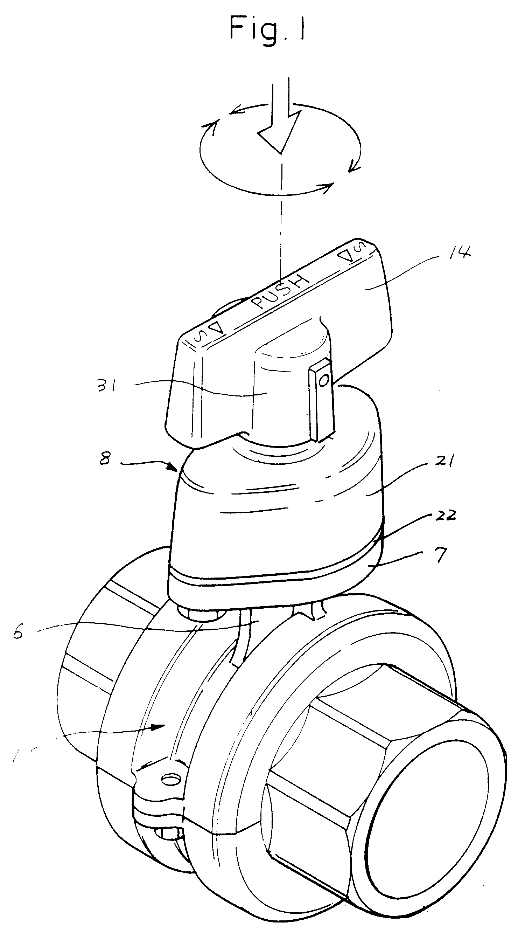

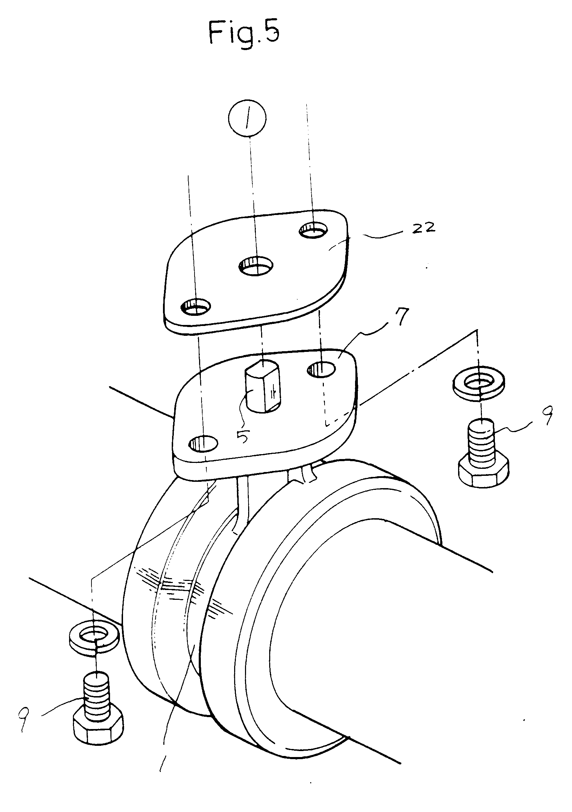

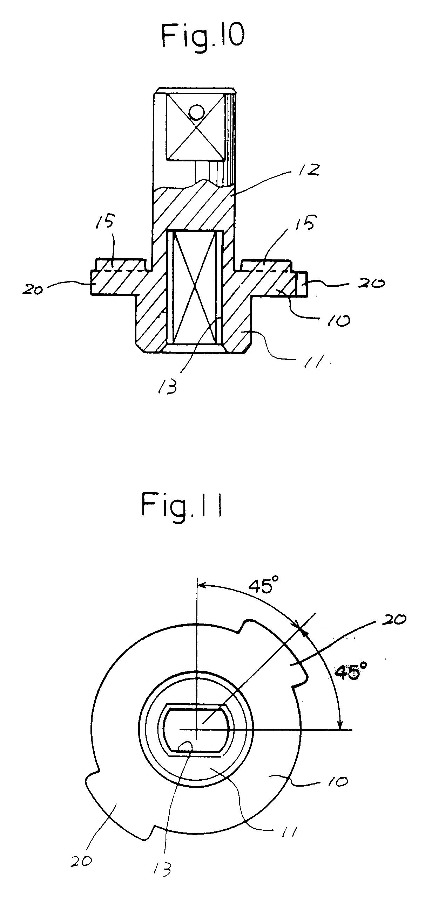

The valve illustrated in Figures 1 to 18 is a butterfly valve, but the present invention is applicable also to other types of valve such as ball valves, cocks and the like, where the valve is controlled by rotating a valve element thereof.

In Figure 1, a butterfly valve 1 is illustrated which comprises a disk-like valve element 3 pivotally mounted in a cylindrical flow passage formed inside a valve body 2 and arranged to open or close the flow passage to control the fluid flow by contacting or becoming detached from a seating ring 4. The seating ring 4 is made from an elastic sealing material and is provided within the inner circumferential surface of the valve body 2. One end of a control stem 5 is connected to the valve element 3 and extends out of the valve body 2 through a shaft 6. A control assembly 8 is provided at the outer end of the stem 5. A clamping plate 7 is provided on the upper surface of the shaft 6, a casing forming part of the control assembly 8 being mounted on the upper surface of the shaft 6 by a bolt 9.

The control assembly 8 comprises a notch plate 10 which rotates synchronously with an outer end of the stem 5 and is axially movable with respect thereto. On the centre of the lower surface of the notch plate 10, a boss portion 11 is provided, while on the upper surface of the plate 10, a cylindrical arbour portion 12 is provided, both the boss portion 11 and the cylindrical arbour 12 being integral with the plate 10. A blind bore 13 is provided beneath in boss portion 11 for receiving an end of the stem 5. At least, one face of the bore 13 or preferably opposing two faces, is formed as a flat surface, and when the stem 5 is received in the bore 13, the flat surface contacts tightly with a flat provided on the stem 5 and thus the plate 10 rotates with but is axially movable upon the stem 5. It will be recognised that other coupling arrangements between the stem 5 and the bore 13 are possible, for example, serrations or a key and ditch arrangement may be applicable. At the top end of the cylindrical arbour portion 12, a control knob 14 is provided and fixed in position by a pin 19 to control the rotation of the plate 10 and stem 5.

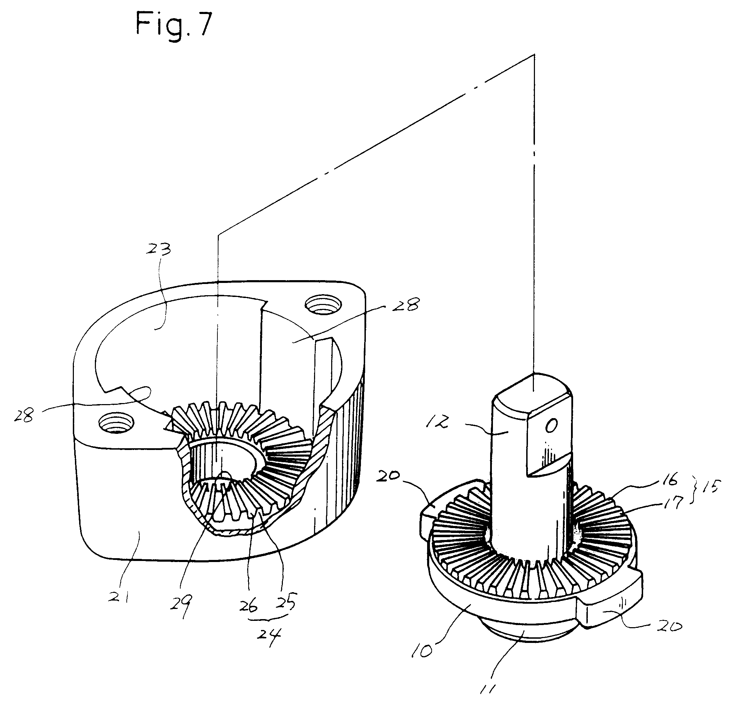

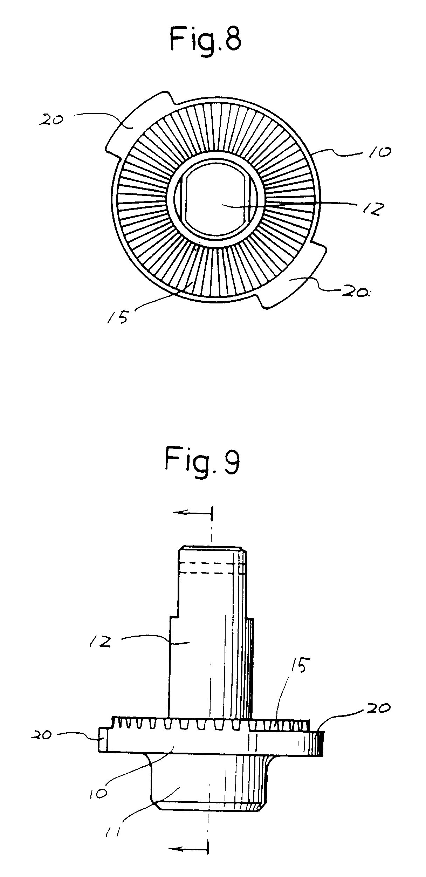

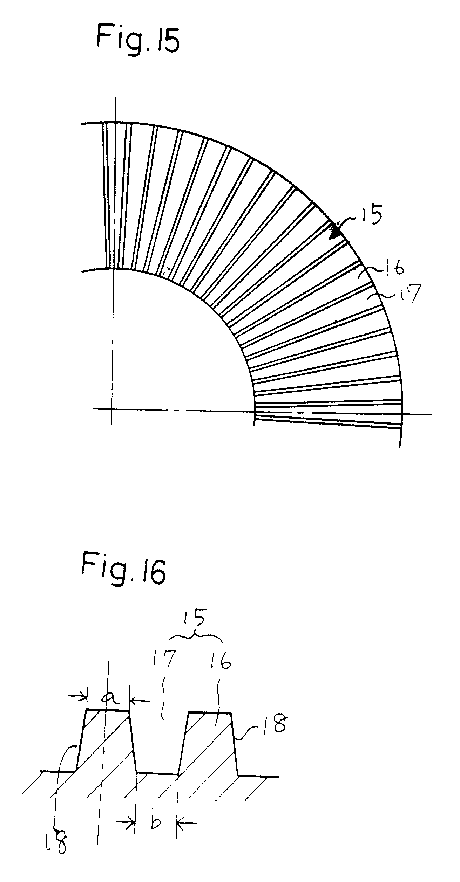

With reference to Figure 7 and Figure 8, the notch plate 10 is of disk-like form, and a plurality of operative notches 15 is established thereupon, each notch 15 being arranged to engage with a fixed notch 24 provided in the casing 24. As shown in Figure 15 and Figure 16, the operative notches 15 each comprise a tooth-like convex projection 16 and a concave recess 17, both of which extend radially toward the outside of the plate 10 from the centre thereof. The notches 15 are formed all over the circumferential surface of the plate 10 and are equally spaced from one another. Both side faces 18 of each tooth-like convex projection 16 are tapered, and the width (a) of the top surface being equal to the width (b) of the bottom surface of each concave recess 17.

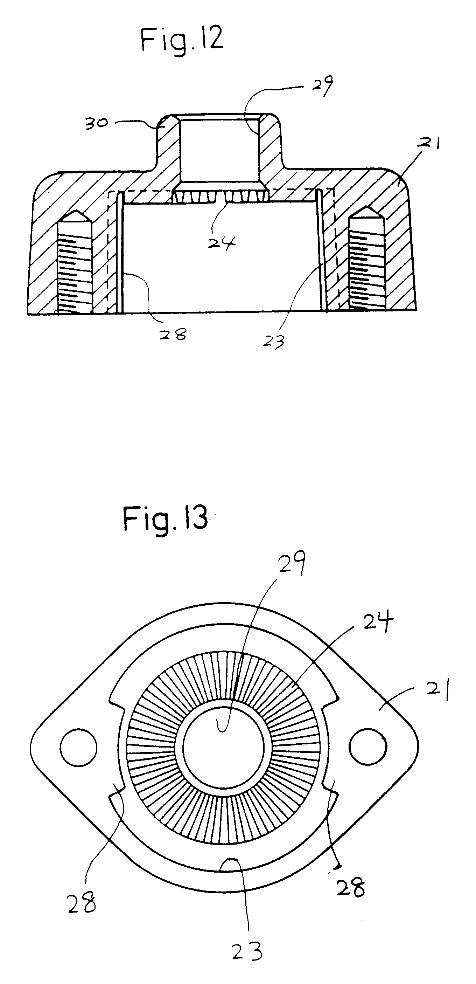

As shown in Figure 11, on the outer, circumferential surface of the notch plate 10, a pair of opposed stoppers 20 are provided, the stoppers 20 being at 45° to the flat surfaces of the bore 13.

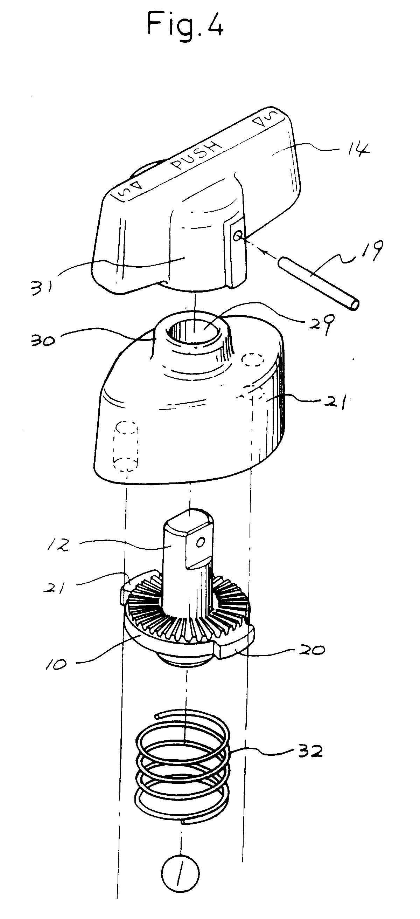

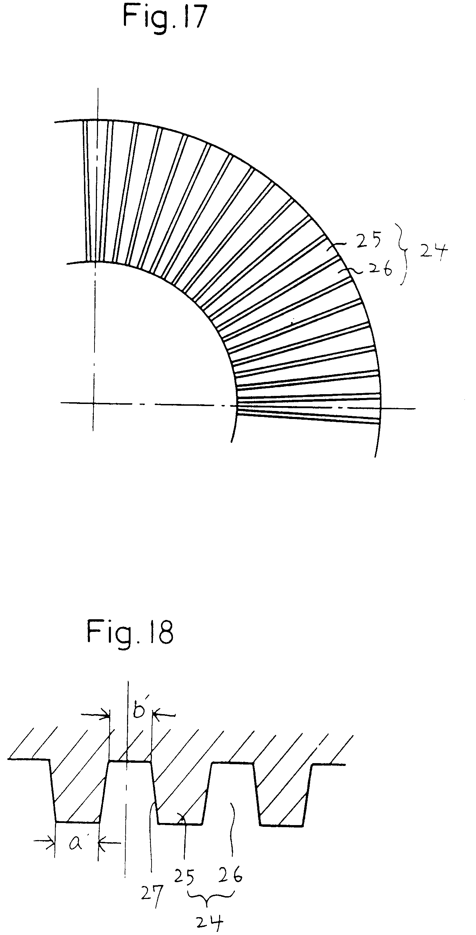

With reference to Figure 4, 5 and 6, the casing 21 of the control assembly houses the notch plate 10. The casing 21 has an open bottom, and is clamped to the upper surface of the clamping plate 7 via a washer plate 22 using bolts 9. In the inside of the casing 21, a central recess 23 of cylindrical form is formed permitting rotation of the notch plate 10, the recess 23 being of depth sufficient for the notch plate 10 to move up and down in the axial direction. On the upper surface of the recess 23, the fixed notches 24 are provided and arranged to engage with the notches 15 provided on the notch plate 10. As shown in Figure 17 and Figure 18, the fixed notches 24, similarly to the notches 15, comprise tooth-like convex projections 25 and a concave recesses 26, both of which extend radially from the centre, the notches 24 is formed all over the circumferential surface, and being equally spaced thereon. Both side faces 27 of each tooth-like convex projection 25 are tapered, and width (a') of the top surface being equal to the width (b') of the bottom surface of each concave recess 26. The fixed notches 24 are arranged to engage with the operative notches 15.

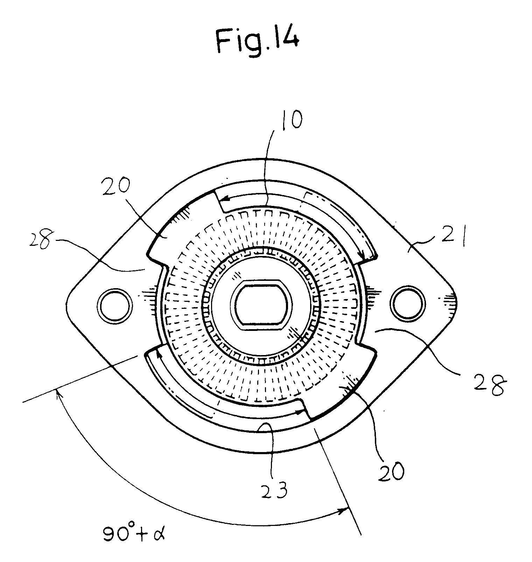

With reference to Figure 12, a stopper receiver 28 is provided and arranged to project inwardly toward the inner surface of the recess 23. The receiver 28 extends in the axial direction, and is adapted to receive the stopper 20 regardless of the axial position of the notch plate 10. As shown in Figure 14, the spacing of the inner surface of the recess 23 and the outer surface of the stopper 20 as well as the spacing of the notch plate 10 and the inner surface of the stopper receiver 28 is arranged so that the rotation of the notch plate 10 can occur freely until the stopper 20 engages the stopper receiver 28, when the notch plate 10 is provided within the casing 21.

An aperture 29 is provided centrally within the casing 21 to permit the cylindrical arbour portion 12 to extend out of the casing 21. The circumferential surface of the aperture 29 is in the form of a cylindrical boss 30 extending from the surface of the casing 21. As shown in Figure 4, a cylindrical bottom portion 31 of the knob 14 is fitted tightly around the boss 31 so that this fitting can guide the rotation caused by the knob 14.

With reference to Figure 4, 5 and 6, a spring 32 is provided between the notch plate 10 over the clamping plate 7 and the washer plate 22, and this spring 32 constantly biases the notch plate 10 towards the fixed notches 24. This biassing ensures the engagement of the notches 15 with the fixed notches 24, whereby the engagement prevents the movement of the notch plate 10 and the knob 14. This engagement also results in the stem 5 being held stationary, hence the setting of the valve element is maintained in the desired position. In this embodiment, the coiled spring is used to bias the notch plate 10, but instead of the coiled spring, other members like leaf spring or an elastic material, for example, rubber, may be used.

The engagement between the notches 15 and the fixed notches 24 is attained by the tooth-like convex projections and the concave recesses wherein the sides of the convex projections are tapered, so that, even if two of the notches 15, 24 are aligned so that the projections thereof are aligned with one another, adequate engagement can be attained by the power of the spring 32. When the combined notches are moved sidewise by the rotation of the knob 14 or the valve element 3, the rectangular shape and the dimensions of the convex projections and the recesses provide a self-lock mechanism, and thus one set of notches does not move with respect to the other. This self-lock mechanism restricts undesired movement of the knob 14, so that the setting of the valve can be held at the fixed position.

In this embodiment, the construction of the operative notches 15 and the fixed notches 24 is based upon the tooth-like convex shape and the concave recess, but instead of this construction, a serration mechanism or a mechanism using a pin engageable in one of a plurality of apertures is also possible. Where a serration mechanism, is used, for the notch plate the serrations are provided at regular intervals on the disk surface. The width of the serrations at the outer diameter is larger than that at the inner part of the disk, the zenith of the serration being higher at the outer diameter, and at the inner diameter should be of bowl-like form, like a conical shape upside down against the disk surface. Therefore, the standard surface for the serration should be formed lower toward the outer diameter and higher toward the inner diameter for the notch side, while, on the contrary, for the casing side, the standard surface should be higher toward the outer diameter and lower toward the inner diameter. In order to satisfy these conditions, the working process becomes complicated, and the total size is forced to become bigger. When the present embodiment is compared with the serration mechanism, the height of the tooth in the serration mechanism is forced to be increased, which needs also increased stroke for the engagement or release. Thus, it is necessary to prepare a longer and more powerful spring in place of the present spring 32 so that this device overcomes the increased stroke. When such a longer or more powerful spring is used, the size of the device is increased.

For the serration mechanism, it is also feared that the release of engagement may occur due to an unbalanced torque imposed on the valve because of changes in the fluid pressure and/or fluid speed or by vibration. For the purpose of overcoming this unexpected release, it is necessary to prepare a much more powerful spring of larger size. When such a larger, stronger spring is used in the device, a stronger force is needed to push down the knob 14, and the total size is increased.

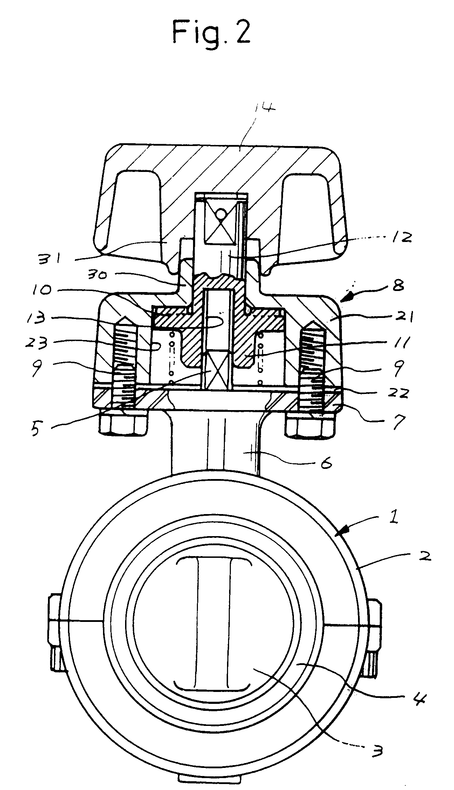

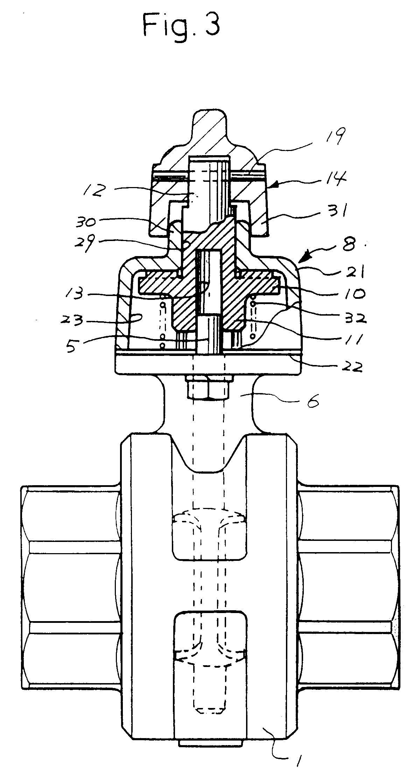

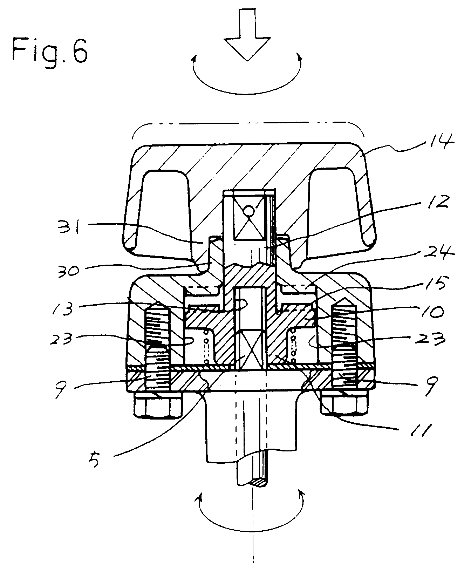

With reference to Figure 2 and Figure 3, the notch plate 10 is lifted under the power of the spring 32, and thus the notches 15 and the fixed notches 24 engage one another to take a locked condition, and the valve is kept open at the desired setting. In order to change the valve setting, as shown in Figure 6, the knob 14 is pushed down against the spring 32. When the knob 14 descends, the cylindrical bottom portion 31 of the knob 14 which is fitted around the cylindrical boss 30 causes the plate 10 and hence the notches 15 to descend, detaching the notches 15 from the fixed notches 24 so as to release the lock, and permit free rotation of the knob 14. When the knob 14 is rotated, the notch plate 10 is synchronously rotated in correspondence with the knob 14 in the same direction via the cylindrical arbour portion 12. The stem 5 provided within the blind bore 13 of the notch plate 10 is also rotated, which finally results in the rotation of the valve element 3 to the desired setting. When the force pushing the knob 14 is released, both the notch plate 10 and the knob 14 are lifted under the action of the spring and the locked condition is obtained by mutual engagement between the notches 15 and the fixed notches 24, and thus the desired setting can be maintained.

With reference to Figure 14, during the rotation of the knob 14, at the maximum opening point or minimum opening point, namely the closing point, the stopper 20 engages with the stopper receiver 28, so that the further movement of the knob 14 is prevented and excessive rotation of the valve element 3 is avoided. In Figure 14, the angle between the stopper 20 and the stopper receiver 28 is defined as 90° + α. The sides of each of the notches 15, 24 are tapered, so that the tooth-like convex projections 16, 25 can be easily fitted or detached from each other. The angle of the taper is below 15°, and preferably at 7°. When the taper angle is larger than 15°, the mutual engagement is not sufficient, and therefore, the angle is preferably as described above.

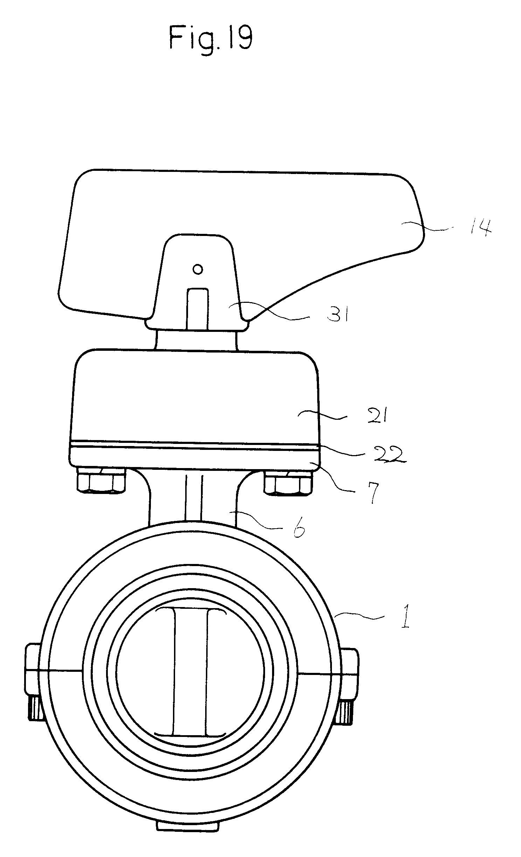

Figure 19 shows a modification of the knob 14. This modification is developed in order to result in smoother operation of the knob. It should be understood by those skilled in the art that such changes or variations may be made without departing from the scope of the present invention as defined by the appended claims.

## Claims

1. A valve comprising a rotatable valve element (3) positioned in a valve body (2) for the opening and closing of a fluid passage, and a control assembly (8) for the valve element, the control assembly (8) being characterized by:
a notch plate (10) provided at an end of a stem (5) which rotatably mounts the valve element (3) within the valve body (2), the notch plate (10) being rotatable with the stem (5) and movable in the axial direction with respect to the stem (5);
an actuator (14) provided on the notch plate (10);
a casing (21) is provided on the valve body (2), the casing (21) housing the notch plate (10) and guiding the axial and rotational movement of the notch plate (10); and
notch means (24) provided in the casing (20), the notch plate (10) being biased towards the notch means (24) and arranged such that when the notch plate (10) engages the notch means (24), rotational movement of the notch plate (10) with respect to the valve body (2) is restricted.

2. A valve as claimed in Claim 1, characterized by a stopper (20) provided on the notch plate (10) and a stopper receiver (28) provided on the casing (21), engagement of the stopper (20) with the stopper receiver (28) restricting movement of the notch plate (10).

3. A valve as claimed in Claim 1 or Claim 2, characterized in that the notch means (24) comprises:
at least one tooth-like convex projection and concave recess, wherein the sides of the or each convex projection are tapered toward its top, and the top width of the convex projection and the bottom width of the recess are equal to one another.

4. A valve as claimed in any one of Claims 1 to 3, characterized in that the notch plate (10) includes at least one tooth-like convex projection and concave recess, wherein the sides of the or each projection are tapered towards its top, the top width of the or each convex projection being equal to the bottom width of the or each recess.

5. A valve as claimed in Claim 3 or Claim 4, characterized in that the or each tooth-like convex projection and the or each concave recess extend radially outward, and the or each convex projection and recess are equally spaced circumferentially.

6. A valve as claimed in any one of the preceding claims, characterized by a coiled spring (32) for biassing the notch plate (10).

7. A valve as claimed in any one of the preceding claims, characterized in that the valve is a butterfly valve comprising:
a valve body (2) having an internal cylindrical fluid passage;
a movable disk valve element (3) rotatably pivoted and positioned in the valve body (2); and
a seating ring made from elastic sealing material inserted between the valve body (2) and the valve element (3).

8. A control assembly for use in a valve of the type claimed in any one of the preceding claims.
